# EUROPÄISCHE PATENTANMELDUNG

(11) **EP 2 487 488 A1**
(43) Veröffentlichungstag der Anmeldung: **15.08.2012**
(21) Anmeldenummer: 11154215.5
(22) Anmeldetag: 11.02.2011
(51) Int. Cl.: G01N 29/22, G01N 29/26, G01N 29/06, G01S 15/89, G10K 11/34, G10K 11/35

(54) **Verfahren zum Durchführen von Ultraschall-Winkelscans an einem Untersuchungsobjekt**

(71) Anmelder: SIEMENS AKTIENGESELLSCHAFT, 80333 München (DE)
(72) Erfinder: Opheys, Michael, 41334 Nettetal (DE)

(57) **Zusammenfassung**

Verfahren zum Durchführen von Ultraschall-Winkelscans an einem Untersuchungsobjekt

Es wird ein Verfahren zum Durchführen von Ultraschall-Winkelscans an einem Untersuchungsobjekt (3) zur Verfügung gestellt, in dem nacheinander mittels eines Prüfkopfes (1) Ultraschallpulse unter verschiednen Einschallwinkeln in das Untersuchungsobjekt (3) zum Generieren von Pulsechos eingebracht werden und die Pulsechos detektiert werden. Die Winkeldifferenz (α) zwischen den Einschallwinkeln zweier aufeinander folgender Ultraschallpulse ist dabei größer als die kleinste Winkeldifferenz (β) zwischen zwei der zur Anwendung komemenden Einschallwinkel und größer als der Divergenzwinkel (5) des verwendeten Prüfkopfes (1) ist.

## Beschreibung

### Verfahren zum Durchführen von Ultraschall-Winkelscans an einem Untersuchungsobjekt

Die vorliegende Erfindung betrifft ein Verfahren zum Durchführen von Ultraschall-Winkelscans an einem Untersuchungsobjekt, in welchem nacheinander mittels eines Prüfkopfs eine Mehrzahl von Ultraschallpulsen unter verschiedenen Einschallwinkeln in das Untersuchungsobjekt eingebracht werden.

Die zerstörungsfreie Prüfung von Werkstücken spielt eine wichtige Rolle bei der Qualitätssicherung und Wartung von aufwendig herzustellenden Produkten. Beispielsweise sind Turbinenschaufeln für Gasturbinen aus hochtemperaturfesten Superlegierungen hergestellt und weisen nicht selten ein gerichtet erstarrtes Kristallgefüge oder gar ein einkristallines Kristallgefüge auf, um die thermische Belastbarkeit weiter zu erhöhen. Der Herstellungsprozess für derartige Turbineschaufeln ist anspruchsvoll und aufwendig. Das Zerstören einer Turbineschaufel im Rahmen der Qualitätskontrolle ist daher nicht wünschenswert. Weiterhin ist es wünschenswert, jede hergestellte Turbinenschaufel auf ihre Qualität hin zu überprüfen, was eine zerstörungsfreie Prüfung erfordert. Aber auch im Rahmen der Wiederaufarbeitung von verschlissenen Turbinenschaufeln (refurbisment) kommen häufig zerstörungsfreie Prüfungsverfahren zum Einsatz, um die innere Integrität des Gefüges der Turbinenschaufeln überprüfen zu können, bevor darüber entschieden wird, ob ein Wiederaufarbeiten der Turbinenschaufel möglich ist oder nicht.

Als zerstörungsfreies Prüfungsverfahren für ein Werkstück kommt häufig die Ultraschallprüfung zur Anwendung. Bei dieser wird ein Ultraschallsignal in das Material des Untersuchungsobjektes eingeschallt und anhand der Abschwächung durch das Untersuchungsobjekt hindurch tretender Signale oder anhand der Intensität im Innen des Untersuchungsobjektes reflektierter Signale eine Aussage über das Gefüge im Inneren abgeleitet. Bei einem sogenannten Winkelscan (sectorial scan) wird Ultraschall in zeitlich kurzen Abständen, die durch die sogenannte Puls-Folge-Frequenz bestimmt sind (PRF: puls recurrence frequency) mit unterschiedlichen Einschallwinkeln in das Untersuchungsobjekt eingebracht. Defekte im Inneren des Untersuchungsobjektes, beispielsweise Risse, Kavitäten, etc. erzeugen Echos der Ultraschallpulse, aus denen auf die Lage und die Größe des Defekts zurück geschlossen werden kann. Ein Verfahren und eine Vorrichtung zum Erzeugen eines Ultraschallbildes ist beispielsweise in EP 2 120 045 A1 beschrieben. In dem darin beschriebenen Verfahren erfolgt das Aufnehmen eines Ultraschallbildes anhand von Winkelscans, die an verschiedenen Orten des Untersuchungsobjektes durchgeführt werden. Jeder Winkelscan wird dabei in einem Winkelbereich von -40° bis + 40° in 21 Schritten von je 4° durchgeführt. Aus den einzelnen Winkelscans wird dann ein Bild des Inneren des Untersuchungsobjektes erstellt.

Bei derartigen, auf der Reflektion von Ultraschallpulsen beruhenden Verfahren entstehen bei vielen Prüfobjekten jedoch Wiederholungsechos, die z.B. von der Reflektion an der Rückwand des Untersuchungsobjektes generiert werden. Dabei kann es vorkommen, dass die Pulsechos zeitlich den Prüfkopf erst erreichen, nachdem bereits der nächste Ultraschallpuls ausgelöst wurde. Sofern das Wiederholungsecho ungefähr im Winkelbereich der Einschallrichtung des Folgepulses empfangen wird, wird das Wiederholungsecho fälschlicherweise als Echo des Folgepulses registriert. Dadurch werden die Ergebnisse des Prüfungsverfahrens verfälscht.

Das beschriebene Phänomen kann vermieden werden, indem die Puls-Folge-Frequenz auf einen niedrigen Wert eingestellt wird, sodass Wiederholungsechos vor dem Aussenden des folgenden Ultraschallpulses beim Messkopf eingehen. In der Praxis führt dies jedoch zu unakzeptabel niedrigen Messraten und daher zu unakzeptablen Messdauern.

Möglich ist auch eine Programmierung von verschiedenen Messtakten im Ultraschallgerät, bei denen die Reihenfolge der Einschallwinkel frei gewählt werden kann. Hierfür muß das Ultraschallgerät und die Software jedoch einen Mehrkanalbetrieb unterstützen. Zudem ist eine Online-Winkelscandarstellung mit den Ultraschallgeräten nach Stand der Technik im Mehrkanalbetrieb nicht möglich.

Aufgabe der vorliegenden Erfindung ist es daher, ein vorteilhaftes Verfahren zum Durchführen von Ultraschall-Winkelscans an einem Untersuchungsobjekt zur Verfügung zu stellen, in welchem die Gefahr von Verwechslungen von Wiederholungsechos mit Pulsechos vermieden wird oder zumindest verringert ist.

Diese Aufgabe wird durch ein Verfahren zum Durchführen von Ultraschall-Winkelscans nach Anspruch 1 gelöst. Die abhängigen Ansprüche enthalten die vorteilhaften Ausgestaltungen der Erfindungen.

In dem erfindungsgemäßen Verfahren zum Durchführen von Ultraschall-Winkelscans an einem Untersuchungsobjekt werden nacheinander mittels eines Prüfkopfes Ultraschallpulse unter verschiedenen Einschallwinkeln in das Untersuchungsobjekt eingebracht, um Pulsechos zu generieren, welche dann detektiert werden. Die Winkeldifferenz zwischen den Einschallwinkel zweier aufeinander folgender Ultraschallpulse ist dabei größer als die kleinste Winkeldifferenz zwischen zwei Einschallwinkeln und größer als der Divergenzwinkel des verwendeten Prüfkopfes.

Dadurch, dass die Winkeldifferenz zwischen den Einschallwinkeln zweier aufeinander folgender Ultraschallpulse größer als die kleinste Winkeldifferenz zwischen zwei Einschallwinkeln ist, ergibt sich, dass im erfindungsgemäßen Verfahren die Einschallwinkel nicht in monoton steigender oder monoton fallender Folge variiert werden.

Stattdessen ergibt sich eine Reihenfolge, in der die Winkeldifferenz zwischen zwei Einschallwinkeln größer gewählt werden kann, als der Divergenzwinkel des Prüfkopfes. Dadurch ist die Empfindlichkeit des Prüfkopfes für Wiederholungsechos des vorangegangenen Pulses gering, da die stärksten Wiederholungsechos dann aus einem erheblich anderen Winkel als das Echo des aktuellen Ultraschallpulses kommen. Beispielsweise kann die Winkeldifferenz zwischen den Einschallwinkeln zweier aufeinander folgender Ultraschallpulse mindestens 8°, vorzugsweise mindestens 14° betragen. Insbesondere wenn die Winkeldifferenz mindestens 14° beträgt, ist der Winkelabstand für viele Prüfköpfe deutlich größer, als der Divergenzwinkel. Falls Prüfköpfe mit geringen Divergenzwinkeln Verwendung finden, kann der Winkelabstand zwischen zwei aufeinander folgenden Ultraschallpulsen jedoch auch kleiner als 14° sein.

In einer weiteren Ausgestaltung des erfindungsgemäßen Verfahrens wird für jeden Einschallwinkel die Zeitdauer vom Einschallen des Ultraschallpulses bis zum Empfang des Pulsechos und/oder die Intensität des detektierten Pulsechos an eine Auswerteroutine weitergeleitet, die daraus eine Bilddarstellung des Inneren des Untersuchungsobjektes generiert. Anhand einer derartigen Bilddarstellung kann eine rasche Qualitätsprüfung des untersuchten Gegenstandes erfolgen. Insbesondere kann die Bilddarstellung auch online mit dem Eingang der Pulsechos erfolgen.

Das nacheinander Einbringen der Ultraschallpulse kann in einer zweckmäßigen Ausgestaltung erfolgen, indem zuerst eine erste Pulsfolge in das Untersuchungsobjekt eingeschallt wird, in der ausgehend von einem ersten Ausgangs-Einschallwinkel die Einschallwinkel aufeinander folgender Ultraschallpulse um eine erste feste Winkeldifferenz vergrößert oder verkleinert werden. Mit anderen Worten, zuerst wird eine Pulsfolge in das Untersuchungsobjekt eingeschallt, in der die Einschallwinkel monoton steigend oder monoton fallend jeweils um feste Winkeldifferenzen variiert werden.

Anschließend wird wenigstens eine zweite Pulsfolge in das Untersuchungsobjekt eingeschallt, in der ausgehend von einem zweiten Ausgangs-Einschallwinkel die Einschallwinkel aufeinander folgender Ultraschallpulse jeweils um die erste feste Winkeldifferenz vergrößert oder verkleinert werden. Dabei unterscheidet sich der zweite Ausgangs-Einschallwinkel von einem der Einschallwinkel der ersten Pulsfolge um eine zweite Winkeldifferenz, die kleiner als die erste Winkeldifferenz ist. Typischerweise stellt die zweite Winkeldifferenz die kleinste Winkeldifferenz zwischen zwei Einschallwinkeln dar. Der Einschallwinkel der ersten Pulsfolge, von dem sich der zweite Ausgangs-Einschallwinkel um die zweite Winkeldifferenz unterscheidet, kann hierbei insbesondere der erste Ausgangs-Einschallwinkel sein.

Auf die soeben beschriebene Weise werden zwei Pulsfolgen generiert, wobei innerhalb jeder Pulsfolge die Winkeldifferenz typischerweise größer als der Divergenzwinkel des verwendeten Prüfkopfes gewählt ist. Wenn sich nun beispielsweise der Anfangs-Einschallwinkel der zweiten Pulsfolge um eine Winkeldifferenz unterscheidet, die geringer ist als die erste Winkeldifferenz, so lässt sich mit der Summe aller aufgenommenen Pulsfolgen eine Winkelscan durchführen, bei dem zwischen den einzelnen Einschallwinkeln geringe Winkeldifferenzen vorhanden sind, bei dem aber während des Scanvorganges immer nur Einschallwinkel aufeinander folgen, deren Winkeldifferenz größer als der Divergenzwinkel des Prüfkopfes ist. Wenn bei dieser Vorgehensweise unter einem Einschallwinkel eingeschallt wird, der einem der zuvor verwendeten Einschallwinkel sehr nahe kommt, ist aufgrund der vorgeschlagenen Messreihenfolge genügend Zeit verstrichen, dass ein Wiederholungsecho aus dieser Richtung nicht mehr zu befürchten ist. Insgesamt lässt sich daher mit dem erfindungsgemäßen Verfahren die Detektion von Wiederholungsechos vermeiden, ohne dass hierfür die Puls-Folge-Frequenz verringert werden müsste und ohne dass eine freie Programmierung von verschiedenen Messtakten nötig ist.

Es ist vorteilhaft, wenn die erste Winkeldifferenz ein ganzzeiliges Vielfaches der zweiten Winkeldifferenz ist. Auf diese Weise lässt sich mit zwei oder mehr aufeinander folgenden Pulsfolgen ein Winkelscan durchführen, an dessen Ende sich die verwendeten Pulse zu einer Gesamtpulsfolge mit äquidistanten Winkelschritten umsortieren lassen. Im Unterschied zum Stand der Technik hat sich also lediglich die Reihenfolge, mit der das Einschallen unter diesen Winkeln vorgenommen wird, verändert.

In einer Weiterbildung des erfindungsgemäßen Verfahrens können die erste Winkeldifferenz und/oder die zweite Winkeldifferenz einstellbar sein. Auf diese Weise kann das Verfahren an unterschiedliche Anforderungen in der Messgenauigkeit oder der Messgeschwindigkeit oder an unterschiedliche Messköpfe mit verschiedenen Divergenzwinkeln angepasst werden.

Wenn eine Auswerteroutine zur Erzeugung einer Bilddarstellung des Inneren des Untersuchungsobjektes zusammen mit der Variante des Verfahrens zur Anwendung kommt, in der aufeinander folgende Pulsfolgen Verwendung finden, die sich in ihren Einschallwinkeln um eine zweite Winkeldifferenz voneinander unterscheiden, ist in der Auswerteroutine eine Zuordnung dar Reihenfolge der eingeschallten Ultraschallpulse zu den jeweiligen Einschallwinkeln hinterlegt. Dies kann beispielsweise in Form eines Zeigerfeldes geschehen.

Zwar wurde die vorliegende Erfindung im Hinblick auf die Vermeidung von Wiederholungsechos ohne Verringerung der Puls-Folge-Frequenz beschrieben, jedoch besteht auch die Möglichkeit, die Puls-Folge-Frequenz zu erhöhen, ohne das Risiko von Wiederholungsechos gegenüber den im Stand der Technik verwendeten Verfahren mit monoton steigenden oder monoton fallenden Winkelfolgen zu erhöhen. Dadurch kann die Messrate erhöht und somit die Dauer einer Messung verringert werden.

Weitere Merkmale, Eigenschaften und Vorteile der vorliegenden Erfindung ergeben sich aus der nachfolgenden Beschreibung eines Ausführungsbeispiels unter Bezugnahme auf die beiliegenden Figuren.
Figur 1 zeigt das Einschallen einer Pulsfolge in ein Untersuchunsobjekt im Rahmen eines Ultraschall-Winkelscans in einer schematischen Darstellung.
Figur 2 zeigt das Einschallen einer gegenüber Figur 1 um eine Winkeldifferenz verschobene Pulsfolge.

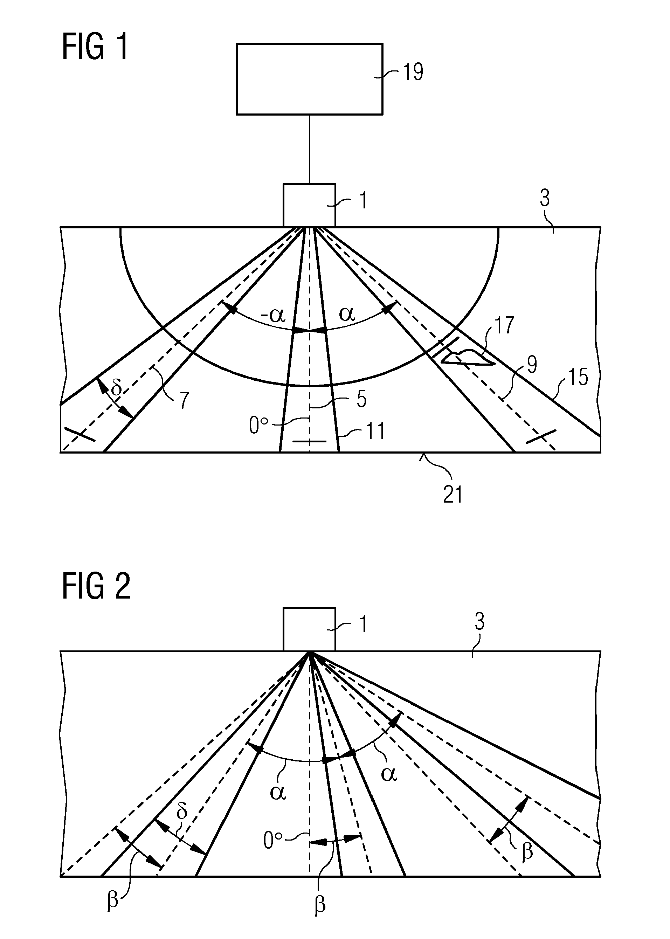

Das erfindungsgemäße Verfahren wird nachfolgend unter Bezugnahme auf die Figuren 1 und 2 näher erläutert. Figur 1 zeigt in einer schematisierten Darstellung das Einschallen von Ultraschallpulsen mittels eines Prüfkopfes 1 in ein Untersuchungsobjekt 3, dass beispielsweise ein Turbinenbauteil wie etwa eine Leit- oder Laufschaufel einer Gasturbine sein kann.

Ausgehend vom Ultraschallprüfkopf 1 werden zum Durchführen eines Ultraschall-Winkelscans nacheinander Ultraschallpulse unter einer Vielzahl von Einschallwinkeln in das Untersuchungsobjekt 3 eingeschallt. In der Figur sind dabei 3 unter verschiedenen Einschallwinkeln eingeschallte Ultraschallpulse anhand ihrer Schallkegel 11,13, 15 exemplarisch dargestellt. Die Einschallwinkel in die Probe werden dabei von der negativen (in das Untersuchungsobjekt hinein gerichteten) Oberflächennormalen des Untershuchungsobjektes aus gemessen. Die Einschallrichtungen der Pulse sind in der Figur als Mittelachsen 5, 7, 9 der die Ultraschallpulse repräsentierenden Schallkegel 11, 13, 15 dargestellt. Jeder Schallkegel weist einen Öffnungswinkel δ auf, der dem Divergenzwinkel des Prüfkopfes 1 entspricht. Derjenige Schallkegel 11, dessen Mittelachse 5 entlang der Oberflächennormalen des Untersuchungsobjekts 3 verläuft, bildet dabei den Einschallwinkel 0°. Die beiden anderen dargestellten Einschallwinkel sind zu dem 0°-Winkel symmetrisch und mit -α und +α bezeichnet. Es sei an dieser Stelle darauf hingewiesen, dass die tatsächliche Zahl an Einschallpulsen, die unter verschiedenen Einschallwinkeln in das Untersuchungsobjekt eingeschallt werden in der Regel deutlich größer ist als 3.

Die in das Untersuchungsobjekt 3 eingeschallten Ultraschallpulse erzeugen Echos, aus denen ein Bild der inneren Struktur des Untersuchungsobjektes 3 gewonnen werden kann. Hierzu werden Pulsechos der eingeschallten Ultraschallpulse detektiert und im Hinblick auf ihre Intensität und die Richtung, aus der das Echo den Prüfkopf 1 erreicht, analysiert.

Aus dem Analyseergebnis erstellt die Auswerteeinheit 19 dann ein Bild der inneren Struktur des Untersuchungsobjektes 3. Dabei werden in der Regel Echos von Strukturen, die innerhalb des Divergenzwinkels des Prüfkopfes 1 liegen, detektiert. Der Divergenzwinkel δ stellt die Begrenzung des Schallkegels dar und ist typischerweise derjenige Winkel, bei dem die Signalintensität um einen bestimmten Wert abgefallen ist, bspw. um sechs Dezibel oder drei Dezibel. Es liegt ein kleinerer Divergenzwinkel (engerer Schallkegel) vor, wenn ein kleinerer Abfall der Signalintensität als Grenze des Schallkegels angesehen wird.

Beim Erstellen des Bildes vom Inneren des Untersuchungsobjektes 3 wird in Richtung jedes Einschallwinkels ein sogenannter A-Scan (Ampitutenscan)durchgeführt, in dem die Ampitutenhöhe als Funktion der Laufzeit vom Einschallen des Pulses bis zum Empfang des Echos gemessen wird. Anschließend wird das Bild aus den unter den verschiedenen Einschallwinkeln des Winkelscans gewonnenen A-Scans zusammengesetzt. Liegen alle Einschallwinkel innerhalb einer Ebene, so entspricht das zusammengesetzte Bild einem sogenannten B-Scan, dem Bild eines zweidimensionalen Schnittes durch das Untersuchungsobjekt 3. Aus mehreren parallel verlaufenden B-Scans kann dann bspw. ein dreidimensionales Bild des Untersuchungsobjektes 3 gewonnen werden.

Zum eigentlichen Durchführen des Winkelscans werden Ultraschallpulse in zeitlich kurzen Abständen, die durch die Puls-Folge-Frequenz bestimmt sind, mit unterschiedlichen Einschallwinkeln in das Untersuchungsobjekt 3 eingebracht. Dabei entstehen Pulsechos an inneren Strukturen des Untersuchungsobjektes, die als Reflektor 17 fungieren. Dies können beispielsweise Risse oder Kavitäten innerhalb der Gefügestruktur des Untersuchungsobjektes 3 sein.

Aus der Richtung und der Laufzeit bis zum Empfang des Impulsechos kann einerseits die Entfernung des Reflektors 17 vom Ort des Prüfkopfes 1 und andererseits die Richtung bezogen auf eine Referenzrichtung, im vorliegenden Ausführungsbeispiel die Richtung 5 des 0°-Ultraschallpulses 11, ermittelt werden.

Bei vielen Untersuchungsobjekten entstehen jedoch nicht nur Echos an inneren Strukturen des Untersuchungsobjektes 3, sondern beispielsweise auch an der Rückwand 21 des Untersuchungsobjektes 3. Diese Echos liefern jedoch keine relevante Information über das innere Gefüge des Untersuchungsobjektes 3. Allerdings können diese Folgeechos den Winkelscan stören, wenn sie zeitlich den Prüfkopf 1 erst dann erreichen, wenn der folgende Ultraschallpuls (nachfolgend Folgepuls genannt) bereits in das Untersuchungsobjekt 3 eingeschallt ist. Wenn das Wiederholungsecho dann aus einer Richtung eintrifft, die ungefähr der Einschallrichtung des Folgepulses entspricht, kann das Wiederholungsecho fälschlicherweise als Echo des Folgepulses missinterpretiert werden, was zu einem Fehler im A-Scan des Folgepulses - und damit zu einem Fehler im Bild des Untersuchungsobjektes 3 - führen kann.

Im Rahmen der vorliegenden Erfindung erfolgt das Einschallen der Ultraschallpulse in das Untersuchungsobjekt 3 in einer Reihenfolge, die dazu führt, dass der o.g. Fehler nicht oder nur in geringerem Maße auftritt. Die gewählte Vorgehensweise beim Einschallen der Ultraschallpulse sorgt dafür, dass aufeinander folgende A-Scans einen hinreichend großen Unterschied in den Einschallwinkeln aufweisen, sodass der Folgescan für verfälschende Wiederholungsechos unempfindlich ist. Dazu werden die Ultraschallpulse statt wie im Stand der Technik üblich, unter einer Anzahl von Einschallwinkeln, die in monoton steigender Folge oder monoton fallender Folge geordnet sind, so eingeschallt, dass die Winkeldifferenz zwischen dem Einschallwinkel eines Ultraschallpulses und den Einschallwinkel des Folgepulses größer als der Divergenzwinkel δ des Prüfkopfes 1 ist und andererseits größer ist als die Winkeldifferenz zwischen den Einschallpulsen, wenn diese in monoton steigender oder monoton fallender Folge sortiert wären. Dies kann dadurch erreicht werden, dass zuerst eine Pulsfolge in das Untersuchungsobjekt 3 eingeschallt wird, in der ausgehend von einem Ausgangs-Einschallwinkel, beispielsweise -α in Figur 1, die Einschallwinkel der folgenden Ultraschallpulse jeweils um eine erste feste Winkeldifferenz vergrößert werden, beispielsweise um die Winkeldifferenz α, sodass als Folgepuls ein Ultraschallpuls im Winkel 0° eingeschallt wird und anschließend ein weiterer Folgepuls unter dem Winkel +α eingeschallt wird. Wie in Figur 1 dargestellt, ist die Winkeldifferenz α größer als der Divergenzwinkel δ des Schallkegels eines eingeschallten Ultraschallpulses. Dadurch sind die A-Scans für die Richtungen -α, 0°, +α sehr unempfindlich gegenüber Folgeechos der jeweils vorausgegangen Ultraschallpulse.

In einem nächsten Schritt wird dann ein erneuter Scan in analoger Weise durchgeführt, wobei jedoch der Ausgangswinkel um eine zweite Winkeldifferenz β geändert wird. Statt ausgehend von einem Einschallwinkel -α erfolgt somit ein Einschallen, bei dem von einem Einschall-Ausgangswinkel von - α + β ausgegangen wird. Der Folgepuls wird dann unter einem Einschallwinkel 0° +β und der darauf folgende Puls unter einem Einschallwinkel von α + β eingeschallt. Typischerweise ist die zweite Winkeldifferenz β kleiner als die erste Winkeldifferenz α. Insbesondere kann die zweite Winkeldifferenz β auch kleiner sein, als der Divergenzwinkel δ des Prüfkopfes 1. Auf diese Weise werden nacheinander A-Scans unter allen Einschallwinkeln durchgeführt, die für das Erstellen des B-Scan notwendig sind.

Im Rahmen des erfindungsgemäßen Verfahrens erfolgt also statt einer einzigen Pulsfolge mit monoton steigenden oder monoton fallenden Einschallwinkeln eine Aufteilung der Menge der Einschallwinkel in mehrere Untergruppen, wobei erst das Einschallen der Einschallwinkel einer Untergruppe vollendet wird, bevor das Einschallen mit Einschallwinkeln einer anderen Untergruppe erfolgt.

Ein Beispiel für eine Reihenfolge der Pulse ist in der nachfolgenden Tabelle dargestellt. In dieser Tabelle gibt die erste Spalte die chronologische Reihenfolge der in das Untersuchungsobjekt eingeschallten Pulse, die zweite Spalte den verwendeten Einschallwinkel gemäß einem Ausführungsbeispiel der Erfindung und die dritte Spalte den Einschallwinkel gemäß Stand der Technik wieder.

| Puls Nr. | Einschallwinkel | Einschallwinkel (Stand der Technik) |
|---|---|---|
| 1 | -28° | -28° |
| 2 | -14° | -26° |
| 3 | 0° | -24° |
| 4 | +14° | -22° |
| 5 | +28° | -20° |
| 6 | -26° | -18° |
| 7 | -12° | -16° |
| 8 | +2° | -14° |
| 9 | +16° | -12° |
| 10 | -24° | -10° |
| 11 | -10° | -8° |
| 12 | +4° | -6° |
| 13 | +18° | -4° |
| 14 | -22° | -2° |
| 15 | -8° | 0° |
| 16 | +6° | +2° |
| 17 | +20° | +4° |
| 18 | -20° | +6° |
| 19 | -6° | +8° |
| 20 | +8° | +10° |
| 21 | +22° | +12° |
| 22 | -18° | +14° |
| 23 | -4° | +16° |
| 24 | +10° | +18° |
| 25 | +24° | +20° |
| 26 | -16° | +22° |
| 27 | -2° | +24° |
| 28 | +12° | +26° |
| 29 | +26° | +28° |

In dem in der Tabelle dargestellten Beispiel wird ein B-Scan aus 29 A-Scans gewonnen, wobei die Gesamtheit aller A-Scans einen Winkelbereich von -28° bis +28° in 2°-Schritten abdeckt. Während im Stand der Technik die Einschallwinkel in monotoner Folge, im vorliegenden Beispiel in monoton steigender Folge von -28° bis +28° durchgescannt werden, erfolgt im erfindungsgemäßen Verfahren ein Aufteilen des Winkelbereichs in Untergruppen. Im vorliegenden Ausführungsbeispiel wird der Winkelbereich in sieben Untergruppen unterteilt, wobei die erste Untergruppe die ersten fünf Pulse umfasst. In dieser Untergruppe wird, ausgehend von einem Ausgangs-Einschallwinkel von -28° der Einschallwinkel von Puls zu Puls jeweils um eine erste Winkeldifferenz α von 14° erhöht. Nachdem die fünf Pulse der ersten Pulsgruppe eingeschallt worden sind, werden die Pulse der zweiten Pulsgruppe eingeschallt. Diese enthält vier Pulse und geht von einem Ausgangs-Einschallwinkel von -26° aus. Die Winkeldifferenz α zwischen den Einschallwinkeln der Ultraschallpulse dieser Gruppe beträgt wieder 14°. Die Winkeldifferenz β zwischen den Ausgangs-Einschallwinkeln der ersten Gruppe und der zweiten Gruppe beträgt 2°.

Nachdem die zweite Pulsgruppe in das Untersuchungsobjekt 3 eingeschallt worden ist, erfolgt das Einschallen der dritten Pulsgruppe, was mit einem Ausgangs-Einschallwinkel von -24° beginnt. Wie in den anderen Gruppen beträgt die Winkeldifferenz α der Einschallwinkel innerhalb der Gruppe 14° und die Winkeldifferenz β des Ausgangs-Einschallwinkel der aktuellen Gruppe zu der vorherigen Gruppe 2°.

Nachdem alle sieben Pulsgruppen in das Untersuchungsobjekt eingeschallt worden sind, sind alle Daten für den vollständigen B-Scan, wie er auch im Stand der Technik vorliegt, vorhanden, wobei die A-Scans jedoch in einer im Vergleich zum Stand der Technik anderen zeitlichen Reihenfolge erfasst worden sind.

Selbstverständlich kann das beschriebene Verfahren auch mit einer anderen ersten Winkeldifferenz α und/oder einer anderen zweiten Winkeldifferenzen β durchgeführt werden, solange die erste Winkeldifferenz größer als der Divergenzwinkel δ des Prüfkopfes 1 ist und die zweite Winkeldifferenz β der kleinsten Winkeldifferenz zwischen zweit Einschallwinkeln aller für den B-Scan verwendeten Einschallwinkel ist. Ein Wert von 14° für die erste Winkeldifferenz α ist jedoch insofern günstig, als das dieser Wert für viele Prüfköpfe deutlich größer als der Divergenzwinkel ist, sodass die Empfindlichkeit des Prüfkopfes 1 für Wiederholungsechos gering ist.

Da die Einschallwinkel im Unterschied zum Stand der Technik nicht in fester, monotoner Reihenfolge durchlaufen werden, ist zum generieren der Bilddarstellung eine Information darüber nötig, welchem Einschallwinkel die zeitlich aufeinander folgenden Pulse jeweils entsprechen. Dies kann beispielsweise mittels einer Software erreicht werden, die ein Feld mit Zeigern (Pointer) definiert, die für jeden der Einschallwinkel aus dem verwendeten Winkelbereich auf die jeweilige Pulsnummer, wie er sich aus der zeitlichen Folge der Pulse ergibt, verweist. Für das in Tabelle 1 dargestellte Ausführungsbeispiel könnte ein solches Zeigerfeld wie folgt aussehen:
Pointer [-28°] = Zeiger auf Daten für Puls 1,
Pointer [-26°] = Zeiger auf Daten für Puls 6,
Pointer [-24°] = Zeiger auf Daten für Puls 10,
Pointer [-22°] = Zeiger auf Daten für Puls 14,
   -
   -
   -
Pointer [+22°] = Zeiger auf Daten für Puls 21,
Pointer [+24°] = Zeiger auf Daten für Puls 25,
Pointer [+26°] = Zeiger auf Daten für Puls 29,
Pointer [+28°] = Zeiger auf Daten für Puls 5.

Mittels dieses Zeigerfeldes kann die Auswerteeinheit 19 die eingehenden Daten eines A-Scans dem entsprechenden Einschallwinkel zuordnen und so den B-Scan genieren. Das Erstellen des Bildes des Untersuchungsobjektes 3 kann dabei in der Auswerteeinheit auch online erfolgen, d.h. das Aufbauen des Bildes aus den einzelnen A-Scans kann erfolgen, indem nach Eingang der Daten für einen A-Scan diese den Daten der zuvor eingegangenen A-Scans hinzugefügt werden und so Stück für Stück der B-Scan generiert wird.

Durch die erfindungsgemäße Wahl der Reihenfolge der Winkel aus dem Winkelbereich, in den ein Ultraschall-Winkelscan durchgeführt werden soll, lassen sich Wiederholungsechos unterdrücken, ohne dass dafür der kleinste Winkelabstand zwischen zwei Winkeln des Winkelbereichs vergrößert werden müsste und ohne dass sich dadurch die Messdauer erhöht. Andererseits kann im Vergleich zum Stand der Technik aber auch die Messgeschwindigkeit, d.h. die Puls-Folge-Frequenz erhöht werden, ohne das Risiko für das Detektieren von Folgeechos signifikant zu erhöhen. In dem in Tabelle 1 dargestellten Beispiel könnte etwa eine 4-fach höhere Puls-Folge-Frequenz verwendet werden, als im Stand der Technik, ohne dass sich das Risiko störender Folgeechos signifikant erhöht.

Die vorliegende Erfindung wurde unter Bezugnahme auf die Figuren 1 und 2 anhand konkreter Ausführungsbeispiele beschrieben. Abwandlungen von diesen Ausführungsbeispielen sind jedoch möglich. So kann beispielsweise eine Möglichkeit vorgesehen werden, die erste Winkeldifferenz α und/oder die zweite Winkeldifferenz β einstellbar auszugestalten. Dabei kann die zweite Winkeldifferenz β, die ja die kleinere der beiden Winkeldifferenzen darstellt, über ein ganzteiliges Verhältnis mit der zweiten Winkeldifferenz α in Verbindung stehen. Beispielsweise kann vorgesehen sein, dass die erste Winkeldifferenz immer um einen festen Faktor größer ist, als die zweite Winkeldifferenz, etwa um einen Faktor 7. In diesem Fall würde, wenn die zweite Winkeldifferenz auf 2° eingestellt wird, wie in dem in der Tabelle dargestellten Ausführungsbeispiel die erste Winkeldifferenz 14° betragen, wenn die zweite Winkeldifferenz auf 1° eingestellt wird 7° und wenn die zweite Winkeldifferenz auf 3° eingestellt wird 21°. Andererseits kann das Verhältnis zwischen erster Winkeldifferenz α und zweiter Winkeldifferenz β auch frei wählbar ausgestaltet sein, wobei die erste Winkeldifferenz α jedoch größer als der Divergenzwinkel δ des verwendeten Prüfkopfes 1 sein sollte. Das freie Einstellen des Verhältnisses zwischen erster Winkeldifferenz α und zweiter Winkeldifferenz β kann erzielt werden, in dem beide Parameter individuell eingegeben werden. Andererseits ist es auch möglich, die freie Einstellbarkeit zu gewährleisten, wenn lediglich ein Winkelwert beispielsweise für die zweite Winkeldifferenz β eingegeben werden kann und dazu ein frei wählbarer Faktor für das Verhältnis von α zu β etwa in einem vorgegebenen Bereich von beispielsweise 2-10 gewählt werden kann. Wenn für die Winkeldifferenz α ein Wert vorgegeben würde, wäre der Faktor kleiner als 1.

## Patentansprüche

1. Verfahren zum Durchführen von Ultraschall-Winkelscans an einem Untersuchungsobjekt (3), in dem nacheinander mittels eines Prüfkopfes (1) Ultraschallpulse unter verschiednen Einschallwinkeln in das Untersuchungsobjekt (3) zum Generieren von Pulsechos eingebracht werden und die Pulsechos detektiert werden,
**dadurch gekennzeichnet, dass**
die Winkeldifferenz (α) zwischen den Einschallwinkeln zweier aufeinander folgender Ultraschallpulse größer als die kleinste Winkeldifferenz (β) zwischen zwei der zur Anwendung komemenden Einschallwinkel und größer als der Divergenzwinkel (α) des verwendeten Prüfkopfes (1) ist.

2. Verfahren nach Anspruch 1,
**dadurch gekennzeichnet, dass**
die Winkeldifferenz (α) zwischen den Einschallwinkeln zweier aufeinander folgender Ultraschallpulse mindestens 8 Grad beträgt.

3. Verfahren nach Anspruch 1 oder Anspruch 2,
**dadurch gekennzeichnet, dass**
für jeden Einschallwinkel die Zeitdauer vom Einschallen des Ultraschallpulses bis zum Empfang des Pulsechos und/oder die Intensität des detektierten Pulsechos an eine Auswerteroutine weitergeleitet wird bzw. werden und die Auswerteroutine daraus eine Bilddarstellung des Inneren des Untersuchungsobjekts (3) generiert.

4. Verfahren nach Anspruch 3,
**dadurch gekennzeichnet, dass**
die Bilddarstellung online mit dem Eingang der Pulsechos erfolgt.

5. Verfahren nach einem der Ansprüche 1 bis 4,
**dadurch gekennzeichnet, dass**
das nacheinander Einbringen der Ultraschallpulse erfolgt, indem zuerst eine erste Pulsfolge in das Untersuchungsobjekt (3) eingeschallt wird, in der ausgehend von einem ersten Ausgangs-Einschallwinkel die Einschallwinkel aufeinander folgender Ultraschallpulse jeweils um eine erste feste Winkeldifferenz (α) vergrößert oder verkleinert werden, und anschließend wenigstens eine zweite Pulsfolge in das Untersuchungsobjekt eingeschallt wird, in der ausgehend von einem zweiten Ausgangs-Einschallwinkel die Einschallwinkel aufeinander folgender Ultraschallpulse jeweils um die erste feste Winkeldifferenz (α) vergrößert oder verkleinert werden, wobei sich der zweiten Ausgangs-Einschallwinkel von einem der Einschallwinkel der ersten Pulsfolge um eine zweite Winkeldifferenz (β) unterscheidet und die zweite Winkeldifferenz (β) keiner als die erste Winkeldifferenz (α) ist und wobei die erste Winkeldifferenz (α) größer als der Divergenzwinkel (δ) des verwendeten Prüfkopfes ist.

6. Verfahren nach Anspruch 5,
**dadurch gekennzeichnet, dass**
der Einschallwinkel der ersten Pulsfolge, von dem sich der Ausgangs-Einschallwinkel der zweiten Pulsfolge um die zweite Winkeldifferenz (β) unterscheidet, der erste Ausgangs-Einschallwinkel ist.

7. Verfahren nach Anspruch 5 oder Anspruch 6,
**dadurch gekennzeichnet, dass**
die erste Winkeldifferenz (α) ein ganzzahliges Vielfaches der zweiten Winkeldifferenz (β) ist.

8. Verfahren nach einem der Ansprüche 5 bis 7,
**dadurch gekennzeichnet, dass**
die erste Winkeldifferenz (α) und/oder die zweite Winkeldifferenz (β) einstellbar ist bzw. sind.

9. Verfahren nach Anspruch 3 und einem der Ansprüche 5 bis 8 oder Anspruch 4 und einem der Ansprüche 5 bis 8,
**dadurch gekennzeichnet, dass**
in der Auswerteroutine eine Zuordnung der zeitlichen Reihenfolge der eingeschallten Ultraschallpulse zu den jeweiligen Einschallwinkeln hinterlegt ist.
